# FASCICULE DE BREVET EUROPEEN

(11) **EP 4 371 106 B1**
(45) Date de publication et mention de la délivrance du brevet: **14.01.2026**
(21) Numéro de dépôt: 22754113.3
(22) Date de dépôt: 05.07.2022
(51) Int. Cl.: G10K 11/172, G10K 11/168, B32B 3/12, B32B 3/26, F02K 1/82

(54) **PROCEDE DE FABRICATION D'UNE STRUCTURE D'ATTENUATION ACOUSTIQUE AVEC CONTROLE DU POSITIONNEMENT D'UNE PEAU ACOUSTIQUE**
VERFAHREN ZUR HERSTELLUNG EINER SCHALLDÄMPFUNGSSTRUKTUR MIT STEUERUNG DER POSITIONIERUNG EINER SCHALLHAUT
METHOD FOR MANUFACTURING AN ACOUSTIC ATTENUATION STRUCTURE WITH CONTROL OF THE POSITIONING OF AN ACOUSTIC SKIN

(30) Priorité: 15.07.2021 FR 2107652
(43) Date de publication de la demande: 22.05.2024
(73) Titulaire: SAFRAN, 75015 Paris (FR)
(72) Inventeur: LANFANT, Nicolas Pierre, 77550 MOISSY-CRAMAYEL (FR); ALGLAVE, Hugues Laurent, 77550 MOISSY-CRAMAYEL (FR); DUNLEAVY, Patrick, 77550 MOISSY-CRAMAYEL (FR)
(74) Mandataire: Cabinet Beau de Loménie
(86) Numéro de dépôt international: PCT/FR2022/051341
(87) Numéro de publication internationale: WO 2023/285749

(56) Documents cités:
- EP-A1- 3 660 295
- EP-A1- 3 696 090
- JP-A- H0 830 277
- US-A1- 2013 186 707

## Description

### Domaine Technique

La présente invention se rapporte au domaine général des structures ou panneaux d'atténuation acoustiques. Elle concerne plus particulièrement les structures d'atténuation acoustiques utilisées pour réduire les bruits produits dans les moteurs d'avion comme dans les turbines à gaz ou échappement de ceux-ci.

### Technique antérieure

Les structures d'atténuation acoustique sont typiquement constituées d'une plaque ou peau de surface acoustique perméable aux ondes acoustiques que l'on souhaite atténuer et d'une plaque ou peau pleine réfléchissante dite « plaque de fermeture », un corps cellulaire, tel qu'un nid d'abeille ou une structure poreuse, étant disposé entre ces deux parois. De façon bien connue, de tels panneaux forment des résonateurs de type Helmholtz qui permettent d'atténuer dans une certaine gamme de fréquences les ondes acoustiques. Des structures d'atténuation acoustique de ce type sont notamment décrites dans les documents US 5 912 442 et GB 2 314 526. Ces structures d'atténuation acoustique sont limitées à des formes de cellules simples telle que celles des alvéoles d'une structure classique de type NIDA^{®}. En conséquence, les performances acoustiques obtenues sont limitées à l'absorption d'une gamme de fréquences très étroite.

Une solution pour augmenter la gamme de fréquences d'atténuation acoustique est de superposer deux corps cellulaires ayant des formes et des dimensions de cellules différentes. Cette solution présente l'inconvénient d'augmenter significativement l'encombrement de la structure d'atténuation acoustique.

Une autre solution connue consiste à placer des troncs de cône ouverts dans des alvéoles comme décrits dans le document EP 3 696 090 et dans le document FR 3 082 987. Si cette solution permet de réduire l'encombrement de la structure d'atténuation acoustique, sa fabrication s'avère délicate dans le cas de l'utilisation d'une peau acoustique multi-perforée.

Dans ce cas, une pluralité de perforations est réalisée dans la peau afin de permettre aux ondes sonores à atténuer de pénétrer dans les cellules de la structure. Les perforations peuvent être réalisées après assemblage de la peau acoustique avec un corps cellulaire simple de type nid d'abeille. En revanche, dans le cas de l'utilisation d'un panneau d'atténuation acoustique comprenant des cellules acoustiques complexes comme par exemple des troncs de cône logés dans des alvéoles, le perçage de la peau acoustique ne peut pas être réalisée après assemblage sans risque d'endommager les troncs de cône ou autres éléments logés dans les alvéoles. En effet, il n'est pas envisageable d'interrompre la course de l'outil de perçage (ex. forêt) immédiatement à sa sortie de la peau car les perçages ne seraient pas nets en sortie de peau, ce qui pénaliserait la performance acoustique de la structure.

Par conséquent, dans le cas de la fabrication d'une structure d'atténuation acoustique comprenant des cellules acoustiques complexes, il est donc préférable de percer la peau acoustique avant son assemblage avec le panneau d'atténuation acoustique. Cependant, dans ce cas, une difficulté importante demeure en ce qui concerne le positionnement précis de la peau acoustique multi-perforée avec le panneau d'atténuation acoustique. En effet, il est très important que les perforations de la peau acoustique débouchent dans les cavités délimitées par les cellules acoustiques complexes et non sur des portions pleines du panneau comme les bords des cellules afin de ne pas pénaliser la performance acoustique de la structure. Sur des structures d'atténuation acoustique de grande dimension, un faible décalage d'alignement local de la peau acoustique peut entraîner en bout de pièce des désalignements importants entre les perforations et les cavités des cellules acoustiques.

En outre, lorsque des perforations débouchent sur les des portions pleines du panneau en raison d'un désalignement, ces perforation deviennent des trous borgnes qui sont à la fois inutiles acoustiquement et néfastes sur le plan aérodynamique car engendrent une augmentation de la trainée de la peau acoustique.

### Exposé de l'invention

La présente invention a donc pour but principal de proposer une structure d'atténuation acoustique qui ne présente pas les inconvénients précités.

Conformément à l'invention, ce but est atteint grâce à un procédé de fabrication d'une structure d'atténuation acoustique comprenant les étapes suivantes :
- réalisation d'un panneau multiéléments acoustiques complexes comprenant une pluralité d'éléments acoustiques complexes creux ayant chacun une forme se rétrécissant progressivement entre une base et un sommet et une pluralité de cloisons formant des cavités acoustiques, chaque élément acoustique complexe étant logé dans une cavité acoustique de manière à former une cellule acoustique,
- réalisation d'une première peau,
- perçage d'une pluralité de perforations à des emplacements déterminés sur la première peau de manière à former une peau acoustique multi-perforée,
- assemblage d'une face du panneau multiéléments acoustiques complexes avec une face d'assemblage de la peau acoustique multi-perforée,
caractérisé en ce que la peau acoustique multi-perforée comprend sur sa face d'assemblage une pluralité de plots de positionnement présents à des emplacements déterminés, chaque plot de positionnement étant configuré pour coopérer avec un élément acoustique complexe creux ou une cavité acoustique lors de l'assemblage du panneau multiéléments acoustiques complexes avec la peau acoustique multi-perforée et en ce que un ou plusieurs plots de positionnement présentent une forme complémentaire de la forme interne des éléments acoustiques complexes creux.

Grâce au procédé de l'invention, il est possible de réaliser les perforations dans la peau acoustique avant son assemblage avec les autres éléments de la structure permettant ainsi un perçage complet et homogène de la peau, tout en assurant un positionnement précis des perforations par rapport aux cellules acoustiques du panneau multiéléments acoustiques complexes lors de l'assemblage de la peau acoustique avec ledit panneau.

Selon un premier aspect particulier du procédé de l'invention, un ou plusieurs plots de positionnement présentent une forme complémentaire de la forme des cavités acoustiques.

Selon un deuxième aspect particulier du procédé de l'invention, la structure d'atténuation acoustique comprend en outre l'assemblage de la face du panneau multiéléments acoustiques complexes opposée à la face recouverte par la peau acoustique multi-perforée avec une face d'assemblage d'une peau de fermeture.

Selon un troisième aspect particulier du procédé de l'invention, au moins un plot de positionnement comprend un organe de fixation. On utilise avantageusement la réserve de matière constituée par les plots de positionnement comme base de maintien pour des organes de fixation qui peuvent notamment participer à la fixation de la structure d'atténuation acoustique.

Selon un quatrième aspect particulier du procédé de l'invention, les éléments acoustiques complexes présentent une forme pyramidale, conique ou en spirale.

Selon un cinquième aspect particulier du procédé de l'invention, au moins le panneau multiéléments acoustiques complexes est en un matériau thermoplastique ou thermodurcissable chargé ou non. Cela permet de maîtriser la masse globale de la structure car les éléments acoustiques complexes peuvent être formés par injection et présenter des épaisseurs très fines.

Selon un sixième aspect particulier du procédé de l'invention, le panneau multiéléments acoustiques complexes est réalisé par injection-compression d'un matériau thermoplastique ou thermodurcissable chargé ou non. L'injection-compression permet de réduire encore l'épaisseur de paroi des éléments acoustiques complexes.

Selon un septième aspect particulier du procédé de l'invention, chaque plot de positionnement est fabriqué avec la peau acoustique par estampage-surmoulage thermoplastique ou estampage avec inserts métalliques.

Selon un huitième aspect particulier du procédé de l'invention, les plots de positionnement et la peau acoustique sont en un matériau thermoplastique, chaque plot de positionnement étant rapporté par soudage ou par collage sur ladite peau.

Selon un neuvième aspect particulier du procédé de l'invention, chaque plot de positionnement est réalisé par fabrication additive.

Selon un dixième aspect particulier du procédé de l'invention, le panneau multiéléments acoustiques complexes et la pluralité de cloisons sont réalisés en une seule pièce par injection d'un matériau thermoplastique ou thermodurcissable chargé ou non. La fabrication de la structure d'atténuation acoustique est ici grandement simplifiée car les éléments acoustiques complexes sont déjà positionnés par rapport aux cloisons.

L'invention a également pour objet une structure d'atténuation acoustique comprenant :
- un panneau multiéléments acoustiques complexes comprenant une pluralité d'éléments acoustiques complexes creux ayant chacun une forme se rétrécissant progressivement entre une base et un sommet et une pluralité de cloisons formant des cavités acoustiques, chaque élément acoustique complexe étant logé dans une cavité acoustique de manière à former une cellule acoustique,
- une peau acoustique multi-perforée comprenant une pluralité de perforations, ladite peau acoustique ayant une face d'assemblage fixée sur une face du panneau multiéléments acoustiques complexes,
caractérisée en ce que la peau acoustique multi-perforée comprend sur sa face d'assemblage une pluralité de plots de positionnement présents à des emplacements déterminés, chaque plot de positionnement coopérant avec un élément acoustique complexe creux ou une cavité acoustique du panneau multiéléments acoustiques complexes et en ce que un ou plusieurs plots de positionnement présentent une forme complémentaire de la forme interne des éléments acoustiques complexes creux.

### Brève description des dessins

[Fig. 1] La figure 1 est une vue schématique éclatée en perspective d'une structure d'atténuation acoustique selon un mode de réalisation de l'invention,
[Fig. 2] La figure 2 est une vue schématique en coupe de la structure d'atténuation acoustique de la figure 1 une fois assemblée,
[Fig. 3] La figure 3 est une vue schématique éclatée en perspective d'une structure d'atténuation acoustique selon un autre mode de réalisation de l'invention,
[Fig. 4] La figure 4 est une vue schématique en coupe de la structure d'atténuation acoustique de la figure 3 une fois assemblée.

### Description des modes de réalisation

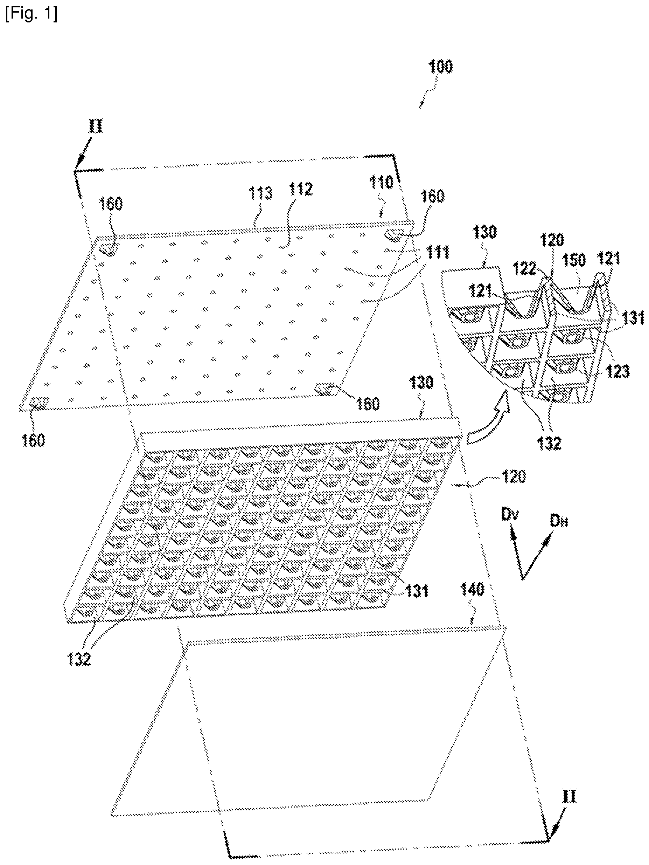

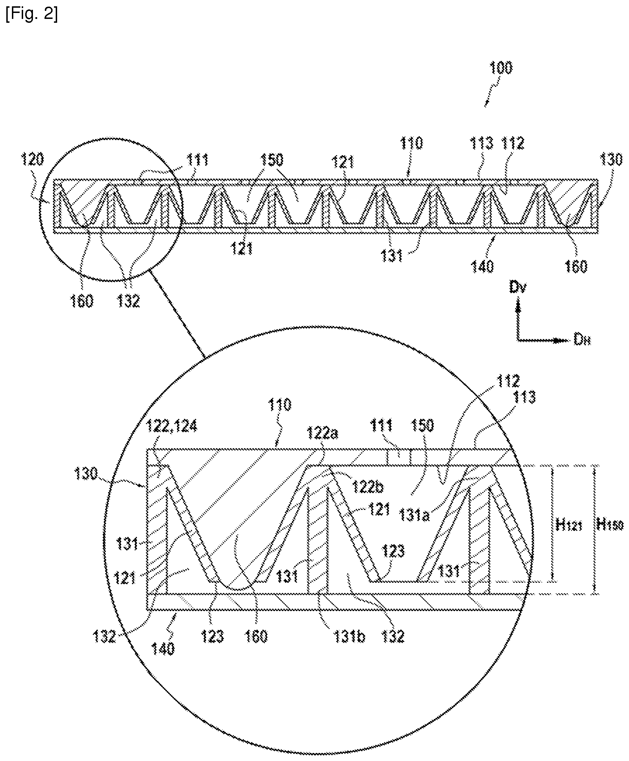

Les figures 1 et 2 représentent une structure d'atténuation acoustique 100 conformément à un mode de réalisation de l'invention. La structure d'atténuation acoustique 100 comprend ici une peau ou plaque acoustique 110, un panneau multiéléments acoustiques complexes 120 et une peau ou plaque de fermeture 140.

La peau de fermeture 140 correspond à une surface pleine destinée à réfléchir les ondes sonores entrant dans la structure d'atténuation acoustique. La peau de fermeture peut être un élément constitutif de la structure d'atténuation acoustique comme dans l'exemple décrit ici ou correspondre à une structure d'un objet, par exemple un moteur d'avion. Dans ce dernier cas, la structure d'atténuation acoustique de l'invention ne comporte pas de peau de fermeture et est directement montée sur la structure de l'objet.

Dans l'exemple de réalisation décrit ici, le panneau multiéléments acoustiques complexes 120 est formé en une seule pièce qui s'étend en longueur et en largeur suivant une direction horizontale D_{H} et en hauteur suivant une direction verticale D_{V}. Le panneau multiéléments acoustiques complexes comprend une pluralité d'éléments acoustiques complexes creux 121 ayant chacunune forme se rétrécissant progressivement entre une base 122 et un sommet 123. Dans l'exemple décrit ici, les éléments acoustiques complexes creux 121 présentent une forme pyramidale. La base 122 de chaque élément acoustique complexe creux 121 est en contact continu avec la base des éléments acoustiques complexes adjacents de manière à former un réseau continu de bords 124.

Le panneau multiéléments acoustiques complexes 120 comprend en outre une pluralité de cloisons 131 formée par un réseau de nervures 130 qui forme une pluralité de cavités acoustiques 132. Chaque élément acoustique complexe creux 121 est logé dans une cavité acoustique 132. Le bord supérieur 131a des cloisons 131 s'étend à partir de la portion inférieure 122b des bases 122 des éléments acoustiques complexes creux 121 suivant la direction verticale D_{V} (figure 2). Dans ce mode de réalisation, le panneau multiéléments acoustiques complexes est formé en une seule pièce avec la pluralité de cloisons, ce qui permet de s'affranchir d'éventuels problèmes de positionnement entre les éléments acoustiques complexes creux et la pluralité de cloisons. Selon une variante de réalisation la peau arrière peut être intégrée à l'ensemble panneau multiéléments acoustiques-cloisons par fabrication additive polymère ou composite.

Le panneau multiéléments acoustiques complexes 120 comprend une pluralité de cellules acoustiques 150 chacune formée par un élément acoustique complexe creux 121 et les cloisons 131 qui l'entourent.

Le panneau multiéléments acoustiques complexes 120 comporte une première face d'assemblage constituée ici par la portion supérieure 122a des bases 122 des éléments acoustiques complexes creux 121 correspondant à la surface exposée des bords 124, cette première face d'assemblage étant destinée à être assemblée avec la peau acoustique 110. Le panneau multiéléments acoustiques complexes 120 comporte en outre une deuxième face d'assemblage constituée ici par le bord inférieur 131b des cloisons 131.

La peau acoustique 110 a pour fonction de laisser passer les ondes sonores à atténuer à l'intérieur de la structure d'atténuation acoustique 100. A cet effet, la peau acoustique 110 comprend une pluralité de perforations 111. La peau acoustique 110 comporte une face d'assemblage 112 opposée à une face externe 113 et qui destinée à être placée en regard du panneau multiéléments acoustiques complexes 120.

Conformément à l'invention, les perforations 111 sont réalisées par perçage dans la peau 110 avant son assemblage avec le panneau multiéléments acoustiques complexes 120. Cela permet de percer la peau acoustique de part en part sans risque d'endommager les éléments acoustiques complexes. Les perforations 111 sont réalisées à des emplacements déterminés sur la peau 110 de manière à déboucher dans le volume interne libre des cellules acoustiques 150 et non sur les bords 124 du panneau multiéléments acoustiques complexes 120 une fois la peau acoustique 110 assemblée avec ledit panneau multiéléments acoustiques complexes. Une ou plusieurs perforations 111 peuvent être alignées avec chaque cavité acoustique 150. Les perforations 111 peuvent représenter entre 5% et 10% de la surface totale de la peau acoustique 110.Toujours conformément à l'invention, la peau acoustique comprend sur sa face d'assemblage 112 une pluralité de plots de positionnement 160, ici au nombre de quatre. Le nombre de plots de positionnement est au minimum de deux afin de permettre un positionnement précis de la peau acoustique avec le panneau multiéléments acoustiques complexes. Les plots de positionnement peuvent être fabriqués avec la peau acoustique par exemple par estampage-surmoulage thermoplastique ou estampage avec inserts métalliques. Les plots peuvent être également rapportés par soudage ou par collage dans le cas de plots et d'une peau en matériau thermoplastique. Les plots peuvent encore être formés par fabrication additive. Les plots peuvent être métalliques, en matériau composite à matrice thermoplastique ou thermodurcissable, chargés ou non. Les plots ne sont pas forcément pleins.

Les plots de positionnement sont de préférence positionnés sur la peau acoustique la réalisation des perforations par perçage, les plots servant alors de référence pour la détermination des emplacements de perçage. On augmente ainsi encore la précision de positionnement des perforations. Toutefois, on ne sort pas du cadre de l'invention lorsque les plots de positionnement sont placés ou formés sur la peau acoustique après perçage des perforations.

Dans l'exemple décrit ici, les plots de positionnement 160 présentent une forme complémentaire de la forme interne des éléments acoustiques complexes creux 121. Les plots peuvent également présenter une forme qui n'est pas complémentaire de la forme interne des éléments acoustiques complexes creux mais qui est apte à coopérer avec ces éléments pour permettre un bon positionnement. Par exemple, des plots sphériques peuvent se centrer facilement dans des éléments creux de forme conique ou pyramidale.

Lors de l'assemblage de la face d'assemblage 112 de la peau acoustique 110 avec la première face d'assemblage constituée par la portion supérieure 122a des bases 122 des éléments acoustiques complexes 121, les plots de positionnement 160 coopèrent avec les éléments acoustiques complexes creux 121 afin de faciliter le positionnement de la peau acoustique 110 par rapport au panneau multiéléments acoustiques complexes 120 et assurer ainsi un parfait alignement des perforations 111 avec le volume interne libre des cellules acoustiques 150 (figure 2).

La peau acoustique 110 est fixée, par collage ou soudage, sur la portion supérieure 122a des bases 122 des éléments acoustiques complexes 121 correspondant à la surface exposée des bords 124 tandis que la peau de fermeture 140 est fixée, par exemple par collage ou soudage, sur le bord inférieur 131b des cloisons 131.

La hauteur H₁₂₁ des éléments acoustiques complexes 121 est inférieure à la hauteur H₁₅₀ des cavités acoustiques 132. Plus précisément, la hauteur H₁₂₁ des éléments acoustiques complexes est comprise entre 10% et 99% de la hauteur H₁₃₂ des cavités acoustiques suivant la direction verticale.

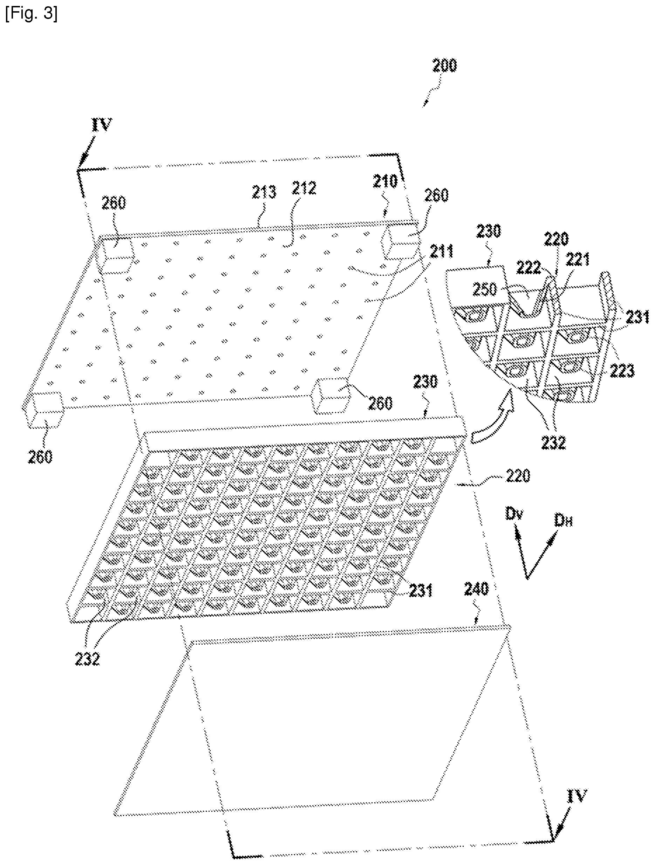

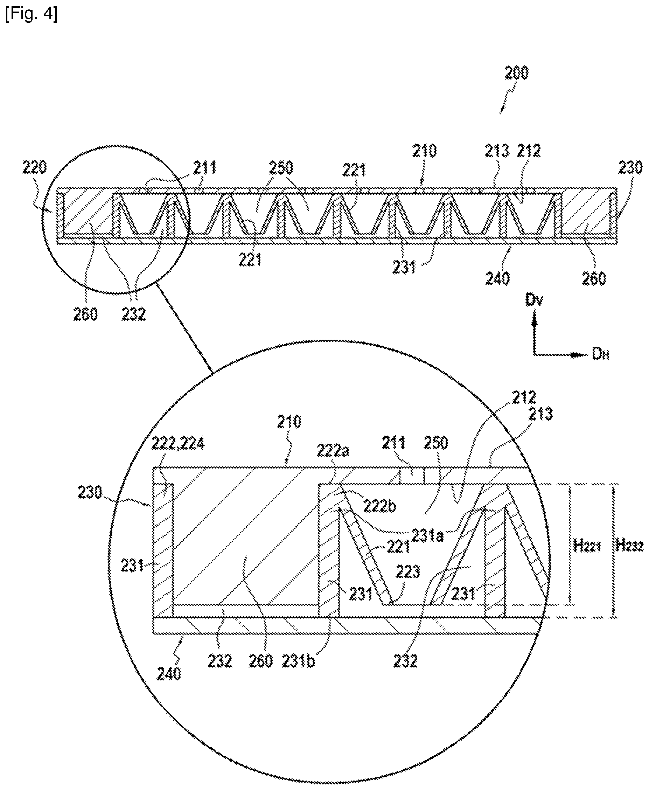

Les figures 3 et 4 représentent un autre mode de réalisation d'une structure d'atténuation acoustique de l'invention qui diffère de la structure illustrée dans les figures 1 et 2 en ce que les plots de positionnement coopèrent avec des cavités acoustiques comme expliqué en détails ci-après.

La structure d'atténuation acoustique 200 comprend ici une peau ou plaque acoustique 210, un panneau multiéléments acoustiques complexes 220 et une peau ou plaque de fermeture 240.

La peau de fermeture 240 correspond à une surface pleine destinée à réfléchir les ondes sonores entrant dans la structure d'atténuation acoustique. La peau de fermeture peut être un élément constitutif de la structure d'atténuation acoustique comme dans l'exemple décrit ici ou correspondre à une structure d'un objet, par exemple un moteur d'avion. Dans ce dernier cas, la structure d'atténuation acoustique de l'invention ne comporte pas de peau de fermeture et est directement montée sur la structure de l'objet.

Dans l'exemple de réalisation décrit ici, le panneau multiéléments acoustiques complexes 220 est formé en une seule pièce qui s'étend en longueur et en largeur suivant une direction horizontale D_{H} et en hauteur suivant une direction verticale D_{V}. Le panneau multiéléments acoustiques complexes comprend une pluralité d'éléments acoustiques complexes creux 221 ayant chacune une forme se rétrécissant progressivement entre une base 222 et un sommet 223. Dans l'exemple décrit ici, les éléments acoustiques complexes creux 221 présentent une forme pyramidale. La base 222 de chaque élément acoustique complexe creux 221 est en contact continu avec la base des éléments acoustiques complexes adjacents de manière à former un réseau continu de bords 224.

Toujours dans l'exemple décrit ici, le panneau multiéléments acoustiques complexes 220 est dépourvu d'éléments acoustiques complexes creux 221 à des endroits déterminés du panneau afin de permettre la coopération de cavités acoustiques avec des plots de positionnement comme expliqué ci-après.

Le panneau multiéléments acoustiques complexes 220 comprend en outre une pluralité de cloisons 231 formée par un réseau de nervures 230 qui forme une pluralité de cavités acoustiques 232. Chaque élément acoustique complexe creux 221 est logé dans une cavité acoustique 232. Le bord supérieur 231a des cloisons 131 s'étend à partir de la portion inférieure 222b des bases 222 des éléments acoustiques complexes creux 221 suivant la direction verticale D_{V} (figure 4). Dans ce mode de réalisation, le panneau multiéléments acoustiques complexes est formé en une seule pièce avec la pluralité de cloisons, ce qui permet de s'affranchir d'éventuels problèmes de positionnement entre les éléments acoustiques complexes creux et la pluralité de cloisons.

Le panneau multiéléments acoustiques complexes 220 comprend une pluralité de cellules acoustiques 250 chacune formée par un élément acoustique complexe creux 221 et les cloisons 231 qui l'entourent.

Le panneau multiéléments acoustiques complexes 220 comporte une première face d'assemblage constituée ici par la portion supérieure 222a des bases 222 des éléments acoustiques complexes creux 221 correspondant à la surface exposée des bords 124, cette première face d'assemblage étant destinée à être assemblée avec la peau acoustique 210. Le panneau multiéléments acoustiques complexes 220 comporte en outre une deuxième face d'assemblage constituée ici par le bord inférieur 231b des cloisons 231.

La peau acoustique 210 a pour fonction de laisser passer les ondes sonores à atténuer à l'intérieur de la structure d'atténuation acoustique 200. A cet effet, la peau acoustique 210 comprend une pluralité de perforations 211. La peau acoustique 210 comporte une face d'assemblage 212 opposée à une face externe 213 et qui destinée à être placée en regard du panneau multiéléments acoustiques complexes 220.

Conformément à l'invention, les perforations 211 sont réalisées par perçage dans la peau 210 avant son assemblage avec le panneau multiéléments acoustiques complexes 220. Cela permet de percer la peau acoustique de part en part sans risque d'endommager les éléments acoustiques complexes. Les perforations 211 sont réalisées à des emplacements déterminés sur la peau 210 de manière à déboucher dans le volume interne libre des cellules acoustiques 250 et non sur les bords 224 du panneau multiéléments acoustiques complexes 220 une fois la peau acoustique 210 assemblée avec ledit panneau multiéléments acoustiques complexes. Une ou plusieurs perforations 211 peuvent être alignées avec chaque cavité acoustique 250. Les perforations 211 peuvent représenter entre 5% et 10% de la surface totale de la peau acoustique 210.

Toujours conformément à l'invention, la peau acoustique comprend sur sa face d'assemblage 212 une pluralité de plots de positionnement 260, ici au nombre de quatre. Le nombre de plots de positionnement est au minimum de deux afin de permettre un positionnement précis de la peau acoustique avec le panneau multiéléments acoustiques complexes.

Dans l'exemple décrit ici, les plots de positionnement 260 présentent une forme complémentaire de la forme interne des cavités acoustiques 232. Le panneau multiéléments acoustiques complexes 220 est dépourvu d'éléments acoustiques complexes creux 221 aux endroits où les plots de positionnement 260 sont destinés à coopérer avec les cavités acoustiques 232.

Lors de l'assemblage de la face d'assemblage 212 de la peau acoustique 210 avec la première face d'assemblage constituée par la portion supérieure 222a des bases 222 des éléments acoustiques complexes 221, les plots de positionnement 260 coopèrent avec les cavités acoustiques 232 afin de faciliter le positionnement de la peau acoustique 210 par rapport au panneau multiéléments acoustiques complexes 220 et assurer ainsi un parfait alignement des perforations 211 avec le volume interne libre des cellules acoustiques 250 (figure 4).

La peau acoustique 210 est fixée, par collage ou soudage, sur la portion supérieure 222a des bases 222 des éléments acoustiques complexes 221 correspondant à la surface exposée des bords 224 tandis que la peau de fermeture 240 est fixée, par exemple par collage ou soudage, sur le bord inférieur 231b des cloisons 231.

La hauteur H₂₂₁ des éléments acoustiques complexes 221 est inférieure à la hauteur H₂₃₂ des cavités acoustiques 232. Plus précisément, la hauteur H₂₂₁ des éléments acoustiques complexes est comprise entre 10% et 99% de la hauteur H₂₃₂ des cavités acoustiques suivant la direction verticale.

Selon une variante de réalisation, la peau acoustique peut être munie à la fois de plots de positionnement ayant une forme complémentaire de la forme interne des éléments acoustiques complexes creux comme les plots 160 et de plots de positionnement ayant une forme complémentaire de la forme interne des cavités acoustiques comme les plots 260.

Selon encore une autre variante de réalisation, les éléments acoustiques complexes creux, d'une part, et les cloisons du panneau multiéléments acoustiques complexes, d'autre part, peuvent être réalisés de manière séparés et être réunis au moment de l'assemblage de la structure d'atténuation acoustique.

Les cavités acoustiques formées par la pluralité de cloisons et dans lesquelles les éléments acoustiques complexes creux sont logés peuvent présenter une forme en carré comme illustrée sur les figures 1 et 3 ou tout autre forme adaptée pour un traitement acoustique comme par exemple une forme d'alvéole de type nid d'abeille (hexaédrique).

La structure d'atténuation acoustique peut avoir une forme plane comme illustrée sur les figures 1 à 4 ou une forme courbée présentant une courbure simple ou multiple.

Un ou plusieurs plots de positionnement peut être en outre avantageusement utilisé comme support de maintien pour un organe de fixation permettant de fixer la structure d'atténuation acoustique sur une pièce d'un moteur comme par exemple un carter de soufflante d'un moteur à turbine à gaz.

Le panneau multiéléments acoustiques complexes est réalisé par injection d'un matériau thermoplastique ou thermodurcissable chargé ou non. La fabrication par injection permet de maîtriser la masse globale de la structure car les éléments acoustiques complexes peuvent être formés avec des épaisseurs très fines, par exemple de l'ordre de 1 mm.

Selon une caractéristique particulière du procédé de l'invention, le panneau multiéléments acoustiques complexes est réalisé par injection-compression d'un matériau thermoplastique ou thermodurcissable chargé ou non. L'injection-compression consiste à injecter la matière dans un moule entrouvert. Ainsi, même si la matière fige, les canaux s'obturent moins. Lorsque la matière est répartie dans l'ensemble du moule, celui-ci est complètement fermé (par un effort de fermeture) pour revenir à la bonne côte. Cela permet d'obtenir des épaisseurs de parois pour le panneau multiéléments acoustiques complexes plus fines qu'avec un procédé d'injection classique. L'injection-compression permet d'obtenir des épaisseurs de parois dans panneau multiéléments acoustiques complexes comprises entre 0,1 mm et 0,5 mm.

Les matériaux thermoplastiques qui peuvent être utilisés pour les injections décrites ci-avant sont notamment les polyaryléthercétones (PAEK) tels que le polyétheréthercétone (PEEK) et le polyéthercétonecétone (PEKK).

Les matériaux thermodurcissables qui peuvent être utilisés pour les injections décrites ci-avant sont notamment l'époxyde ou les polybismaléimides (BMI).

La pluralité de cloisons, la peau de fermeture ainsi que les ensembles réunissant en une seule pièce la pluralité de cloisons et le panneau multiéléments acoustiques complexes ou la pluralité de cloisons et une des peaux peuvent être également réalisés par injection d'un matériau thermoplastique ou thermodurcissable chargé ou non. La pluralité de cloisons peut également être obtenue en utilisant une structure de nid d'abeille par exemple en aluminium ou en Nomex^{®}.

## Revendications

1. Procédé de fabrication d'une structure d'atténuation acoustique (100) comprenant les étapes suivantes :
- réalisation d'un panneau multiéléments acoustiques complexes (120) comprenant une pluralité d'éléments acoustiques complexes creux (121) ayant chacun une forme se rétrécissant progressivement entre une base (122) et un sommet (123) et une pluralité de cloisons (131) formant des cavités acoustiques (132), chaque élément acoustique complexe étant logé dans une cavité acoustique de manière à former une cellule acoustique (150),
- réalisation d'une première peau,
- perçage d'une pluralité de perforations (111) à des emplacements déterminés sur la première peau de manière à former une peau acoustique multi-perforée (110),
- assemblage d'une face (122a) du panneau multiéléments acoustiques complexes (120) avec une face d'assemblage (112) de la peau acoustique multi-perforée (110),
**caractérisé en ce que** la peau acoustique multi-perforée (110) comprend sur sa face d'assemblage (112) une pluralité de plots de positionnement (160) présents à des emplacements déterminés, chaque plot de positionnement (160) étant configuré pour coopérer avec un élément acoustique complexe creux (121) ou une cavité acoustique (150) lors de l'assemblage du panneau multiéléments acoustiques complexes (120) avec la peau acoustique multi-perforée (110) et **en ce que** un ou plusieurs plots de positionnement présentent une forme complémentaire de la forme interne des éléments acoustiques complexes creux.

2. Procédé selon la revendication 1, dans lequel un ou plusieurs plots de positionnement présentent une forme complémentaire de la forme des cavités acoustiques.

3. Procédé selon la revendication 1 ou 2, dans lequel la structure d'atténuation acoustique (200) comprend en outre l'assemblage de la face du panneau multiéléments acoustiques complexes (220) opposée à la face recouverte par la peau acoustique multi-perforée (210) avec une face d'assemblage d'une peau de fermeture (240).

4. Procédé selon l'une quelconque des revendications 1 à 3, dans lequel au moins un plot de positionnement comprend un organe de fixation.

5. Procédé selon l'une quelconque des revendications 1 à 4, dans lequel les éléments acoustiques complexes (121) présentent une forme pyramidale, conique ou en spirale.

6. Procédé selon l'une quelconque des revendications 1 à 5, dans lequel au moins le panneau multiéléments acoustiques complexes (120) est en un matériau thermoplastique ou thermodurcissable chargé ou non.

7. Procédé selon la revendication 6, dans lequel au moins le panneau multiéléments acoustiques complexes (120) est réalisé par injection d'un matériau thermoplastique ou thermodurcissable chargé ou non.

8. Procédé selon la revendication 7, dans lequel le panneau multiéléments acoustiques complexes (120) et la pluralité de cloisons (131) sont réalisés en une seule pièce par injection d'un matériau thermoplastique ou thermodurcissable chargé ou non.

9. Procédé selon l'une quelconque des revendications 1 à 8, dans lequel chaque plot de positionnement est fabriqué avec la peau acoustique par estampage-surmoulage thermoplastique ou estampage avec inserts métalliques.

10. Procédé selon l'une quelconque des revendications 1 à 8, dans lequel les plots de positionnement et la peau acoustique sont en un matériau thermoplastique, chaque plot de positionnement étant rapporté par soudage ou par collage sur ladite peau.

11. Procédé selon l'une quelconque des revendications 1 à 8, dans lequel chaque plot de positionnement est réalisé par fabrication additive.

12. Structure d'atténuation acoustique (100) comprenant :
- un panneau multiéléments acoustiques complexes (120) comprenant une pluralité d'éléments acoustiques complexes creux (121) ayant chacun une forme se rétrécissant progressivement entre une base (122) et un sommet (123) et une pluralité de cloisons (131) formant des cavités acoustiques (132), chaque élément acoustique complexe étant logé dans une cavité acoustique de manière à former une cellule acoustique (150),
- une peau acoustique multi-perforée (110) comprenant une pluralité de perforations (111), ladite peau acoustique ayant une face d'assemblage (112) fixée sur une face (122a) du panneau multiéléments acoustiques complexes (120),
**caractérisée en ce que** la peau acoustique multi-perforée (110) comprend sur sa face d'assemblage (112) une pluralité de plots de positionnement (160) présents à des emplacements déterminés, chaque plot de positionnement (160) coopérant avec un élément acoustique complexe creux (121) ou une cavité acoustique (150) du panneau multiéléments acoustiques complexes (120) et **en ce que** un ou plusieurs plots de positionnement présentent une forme complémentaire de la forme interne des éléments acoustiques complexes creux.

## Patentansprüche

1. Verfahren zur Herstellung einer Schalldämpfungsstruktur (100), umfassend die folgenden Schritte:
- Verwirklichung eines Paneels (120) mit einer Vielzahl von komplexen akustischen Elementen, das mehrere hohle komplexe akustische Elemente (121), die jeweils eine Form aufweisen, die sich zwischen einer Basis (122) und einem Scheitelpunkt (123) progressiv verengt, und mehrere Trennwände (131) umfasst, welche akustische Hohlräume (132) bilden, wobei jedes komplexe akustische Element in einem akustischen Hohlraum auf solche Weise untergebracht ist, dass eine akustische Zelle (150) gebildet wird,
- Verwirklichung einer ersten Haut,
- Einbringen von mehreren Perforationen (111) an bestimmten Stellen auf der ersten Haut auf solche Weise, dass eine mehrfach perforierte akustische Haut (110) gebildet wird,
- Montieren einer Seite (122a) des Paneels (120) mit einer Vielzahl von komplexen akustischen Elementen an einer Montageseite (112) der mehrfach perforierten akustischen Haut (110),
**dadurch gekennzeichnet, dass** die mehrfach perforierte akustische Haut (110) auf ihrer Montageseite (112) mehrere Positionierungsstifte (160) umfasst, die an bestimmten Stellen vorliegen, wobei jeder Positionierungsstift (160) dazu ausgestaltet ist, mit einem hohlen komplexen akustischen Element (121) oder einem akustischen Hohlraum (150) bei der Montage des Paneels (120) mit einer Vielzahl von komplexen akustischen Elementen an der mehrfach perforierten akustischen Haut (110) zusammenzuwirken, und dass ein oder mehrere Positionierungsstifte eine Form aufweisen, die zu der inneren Form der hohlen komplexen akustischen Elemente komplementär ist.

2. Verfahren nach Anspruch 1, wobei ein oder mehrere Positionierungsstifte eine Form aufweisen, die zu der Form der akustischen Hohlräume komplementär ist.

3. Verfahren nach Anspruch 1 oder 2, wobei die Schalldämpfungsstruktur (200) ferner die Montage der Seite (220) des Paneels mit einer Vielzahl von komplexen akustischen Elementen, die der von der mehrfach perforierten akustischen Haut (210) bedeckten Seitenfläche entgegengesetzt ist, an einer Montageseite einer Abschlusshaut (240) umfasst.

4. Verfahren nach einem der Ansprüche 1 bis 3, wobei zumindest ein Positionierstift ein Befestigungselement umfasst.

5. Verfahren nach einem der Ansprüche 1 bis 4, wobei die komplexen akustischen Elemente (121) eine pyramidenförmige, konische oder Spiralform aufweisen.

6. Verfahren nach einem der Ansprüche 1 bis 5, wobei zumindest das Paneel (120) mit einer Vielzahl von komplexen akustischen Elementen aus einem gefüllten oder ungefüllten thermoplastischen oder wärmehärtbaren Material besteht.

7. Verfahren nach Anspruch 6, wobei zumindest das Paneel (120) mit einer Vielzahl von komplexen akustischen Elementen durch Spritzen eines gefüllten oder ungefüllten thermoplastischen oder wärmehärtbaren Materials verwirklicht wird.

8. Verfahren nach Anspruch 7, wobei das Paneel (120) mit einer Vielzahl von komplexen akustischen Elementen und die mehreren Trennwände (131) in einem Stück durch Spritzen eines gefüllten oder ungefüllten thermoplastischen oder wärmehärtbaren Materials verwirklicht werden.

9. Verfahren nach einem der Ansprüche 1 bis 8, wobei jeder Positionierungsstift mit der akustischen Haut durch Stanzen und thermoplastisches Überformen oder durch Stanzen mit metallischen Einsätzen gefertigt wird.

10. Verfahren nach einem der Ansprüche 1 bis 8, wobei die Positionierungsstifte und die akustische Haut aus einem thermoplastischen Material bestehen, wobei jeder Positionierungsstift durch Schweißen oder Kleben an der Haut angebracht wird.

11. Verfahren nach einem der Ansprüche 1 bis 8, wobei jeder Positionierungsstift durch additive Fertigung verwirklicht wird.

12. Schalldämpfungsstruktur (100), umfassend:
ein Paneel (120) mit einer Vielzahl von komplexen akustischen Elementen, das mehrere hohle komplexe akustische Elemente (121), die jeweils eine Form aufweisen, die sich zwischen einer Basis (122) und einem Scheitelpunkt (123) progressiv verengt, und mehrere Trennwände (131) umfasst, welche akustische Hohlräume (132) bilden,
wobei jedes komplexe akustische Element in einem akustischen Hohlraum auf solche Weise untergebracht ist, dass eine akustische Zelle (150) gebildet wird,
- eine mehrfach perforierte akustische Haut (110) umfassend mehrere Perforationen (111), wobei die akustische Haut eine Montageseite (112) aufweist, die an einer Seite (122a) des Paneels (120) mit einer Vielzahl von komplexen akustischen Elementen befestigt ist,
**dadurch gekennzeichnet, dass** die mehrfach perforierte akustische Haut (110) auf ihrer Montageseite (112) mehrere Positionierungsstifte (160) umfasst, die an bestimmten Stellen vorliegen, wobei jeder Positionierungsstift (160) mit einem hohlen komplexen akustischen Element (121) oder einem akustischen Hohlraum (150) des Paneels (120) mit einer Vielzahl von komplexen akustischen Elementen zusammenwirkt, und dass ein oder mehrere Positionierungsstifte eine Form aufweisen, die zu der inneren Form der hohlen komplexen akustischen Elemente komplementär ist.

## Claims

1. A method for manufacturing an acoustic attenuation structure (100) comprising the following steps:
- making a complex acoustic multi-element panel (120) comprising a plurality of hollow complex acoustic elements (121) each having a shape gradually narrowing between a base (122) and a top (123) and a plurality of partitions (131) forming acoustic cavities (132), each complex acoustic element being housed in an acoustic cavity so as to form an acoustic cell (150),
- making a first skin,
- piercing a plurality of perforations (111) on the first skin at determined locations so as to form a multi-perforated acoustic skin (110),
- assembling a face (122a) of the complex acoustic multi-element panel (120) with an assembly face (112) of the multi-perforated acoustic skin (110), **characterized in that** the multi-perforated acoustic skin (110) comprises on its assembly face (112) a plurality of positioning studs (160) present at determined locations, each positioning stud (160) being configured to cooperate with a hollow complex acoustic element (121) or an acoustic cavity (150) during the assembly of the complex acoustic multi-element panel (120) with the multi-perforated acoustic skin (110) and **in that** one or several positioning studs have a shape complementary to the inner shape of the hollow complex acoustic elements.

2. The method according to claim 1, wherein one or several positioning studs have a shape complementary to the shape of the acoustic cavities.

3. The method according to claim 1 or 2, wherein the acoustic attenuation structure (200) further comprises the assembly of the face of the complex acoustic multi-element panel (220) opposite to the face covered by the multi-perforated acoustic skin (210) with an assembly face of a closing skin (240).

4. The method according to any one of claims 1 to 3, wherein at least one positioning stud comprises a fixing member.

5. The method according to any one of claims 1 to 4, wherein the complex acoustic elements (121) have a pyramidal, conical or spiral shape.

6. The method according to any one of claims 1 to 5, wherein at least the complex acoustic multi-element panel (120) is made of a filled or unfilled thermoplastic or thermosetting material.

7. The method according to claim 6, wherein at least the complex acoustic multi-element panel (120) is made by injection of a filled or unfilled thermoplastic or thermosetting material.

8. The method according to claim 7, wherein the complex acoustic multi-element panel (120) and the plurality of partitions (131) are made in a single piece by injection of a filled or unfilled thermoplastic or thermosetting material.

9. The method according to any one of claims 1 to 8, wherein each positioning stud is manufactured with the acoustic skin by thermoplastic stamping-overmolding or stamping with metal inserts.

10. The method according to any one of claims 1 to 8, wherein the positioning studs and the acoustic skin are made of a thermoplastic material, each positioning stud being added by welding or by bonding onto said skin.

11. The method according to any one of claims 1 to 8, wherein each positioning stud is made by additive manufacturing.

12. An acoustic attenuation structure (100) comprising:
- a complex acoustic multi-element panel (120) comprising a plurality of hollow complex acoustic elements (121) each having a shape gradually narrowing between a base (122) and a top (123) and a plurality of partitions (131) forming acoustic cavities (132), each complex acoustic element being housed in an acoustic cavity so as to form an acoustic cell (150),
- a multi-perforated acoustic skin (110) comprising a plurality of perforations (111), said acoustic skin having an assembly face (112) fixed on a face (122a) of the complex acoustic multi-element panel (120),
**characterized in that** the multi-perforated acoustic skin (110) comprises on its assembly face (112) a plurality of positioning studs (160) present at determined locations, each positioning stud (160) cooperating with a hollow complex acoustic element (121) or an acoustic cavity (150) of the complex acoustic multi-element panel (120) and **in that** one or several positioning studs have a shape complementary to the inner shape of the hollow complex acoustic elements.
